# EUROPÄISCHE PATENTANMELDUNG

(11) **EP 3 355 037 A1**
(43) Veröffentlichungstag der Anmeldung: **01.08.2018**
(21) Anmeldenummer: 18150937.3
(22) Anmeldetag: 10.01.2018
(51) Int. Cl.: G01J 3/26, G01J 3/02, G01J 1/06

(54) **BAUELEMENT ZUM BEGRENZEN EINES EINFALLSWINKELS VON LICHT, MIKROSPEKTROMETER UND VERFAHREN ZUM HERSTELLEN DES BAUELEMENTS**

(30) Priorität: 25.01.2017 DE 102017201129
(71) Anmelder: Robert Bosch GmbH, 70442 Stuttgart (DE)
(72) Erfinder: Noltemeyer, Ralf, 71083 Herrenberg (DE); Kueppers, Hartmut, 72762 Reutlingen (DE); Stein, Benedikt, 70193 Stuttgart (DE); Husnik, Martin, 70176 Stuttgart (DE); Schelling, Christoph, 70619 Stuttgart (DE)

(57) **Zusammenfassung**

Die Erfindung betrifft ein Bauelement (100) zum Begrenzen eines Einfallswinkels von Licht, wobei das Bauelement (100) eine Matrix (102) aus in einer Einfallsrichtung (106) des Lichts ausgerichteten Lichtleitern (104) aufweist, die durch ein Muster (108) aus in der Einfallsrichtung (106) ausgerichteten Trennwänden (110) aus einem lichtabsorbierenden Material voneinander getrennt sind.

## Beschreibung

### Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Bei einem Mikrospektrometer kann schräg einfallendes Licht zu einer Verfälschung von Messergebnissen führen.

### Offenbarung der Erfindung

Vor diesem Hintergrund werden mit dem hier vorgestellten Ansatz ein Bauelement zum Begrenzen eines Einfallswinkels von Licht, weiterhin ein Mikrospektrometer mit dem Bauelement, sowie schließlich ein Verfahren zum Herstellen des Bauelements gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Bauelement zum Begrenzen eines Einfallswinkels von Licht vorgestellt, wobei das Bauelement eine Matrix aus in einer Einfallsrichtung des Lichts ausgerichteten Lichtleitern aufweist, die durch ein in der Einfallsrichtung ausgerichtetes Muster von Trennwänden aus einem lichtabsorbierenden Material voneinander getrennt sind.

Unter einer Einfallsrichtung kann beispielsweise eine Flächennormale zu einer Oberfläche des Bauelements verstanden werden. Ein Einfallswinkel kann ein Winkelbereich um die Einfallsrichtung sein. Das lichtabsorbierende Material kann beispielsweise schwarz und/oder porös sein. Beispielsweise kann das Material Nanowires aufweisen. Die Trennwände können ferner beschichtet sein.

Die Lichtleiter können als Aussparungen aus einem lichtabsorbierenden Substrat des Bauelements strukturiert, insbesondere getrencht (d.h. DRIE-geätzt/ reaktiv ionentiefgeätzt) sein. Dabei bildet das Substrat zwischen den Lichtleitern die Trennwände aus. Alternativ können die Lichtleiter durch ein transparentes Substrat des Bauelements ausgebildet sein. Dabei sind für die Trennwände Gräben in das Substrat strukturiert, insbesondere getrencht und mit dem lichtabsorbierenden Material aufgefüllt, um die Trennwände auszubilden. Wenn die Lichtleiter als Aussparungen ausgeführt sind, kann das Bauelement sehr leicht ausgeführt sein. Wenn die Lichtleiter aus Substratmaterial bestehen, kann das Bauelement sehr stabil sein.

Die Gräben können von einer Seite des Substrats bis zu einer Trennwandtiefe strukturiert, insbesondere getrencht sein. Die Trennwandtiefe kann geringer als eine Materialstärke des Substrats sein. Durch das Strukturieren von Gräben bleibt Substrat unberührt. Das unberührte Substrat stabilisiert das Bauelement bei mechanischer Belastung.

Das Muster kann in einer ersten Schicht des Substrats angeordnet sein. Zumindest ein weiteres Muster von Trennwänden kann in zumindest einer weiteren Schicht des Substrats angeordnet sein. Das Muster und das weitere Muster können unterschiedlich ausgerichtet sein. Bei einem mehrschichtigen Aufbau können die Muster der Trennwände einfach gestaltet sein. Die überlagerten Muster ergänzen sich dabei funktional zu Lichtleitern.

Das Muster kann parallele geradlinige Trennwände aufweisen. Alternativ kann das Muster eine Wabenstruktur ausbilden. Geradlinige Trennwände können einfach und schnell hergestellt werden. Eine Wabenstruktur weist eine geringen Flächenverbrauch auf.

Das Bauelement kann zumindest einer auf einer Oberfläche des Bauelements angeordnete Blendenstruktur aufweisen. Die Blendenstruktur kann ein der Matrix entsprechendes Muster aus Blendenöffnungen aufweisen. Die Blendenstruktur kann den Einfallswinkel weiter begrenzen.

Weiterhin wird ein Mikrospektrometer mit folgenden Merkmalen vorgestellt:
einem Bauelement gemäß dem hier vorgestellten Ansatz;
einem spektralen Element; und
einem Detektor, wobei das Bauelement und das spektrale Element in einem optischen Pfad des Mikrospektrometers vor dem Detektor angeordnet sind.

Das Mikrospektrometer kann eine Lichtquelle aufweisen. Das Bauelement und das spektrale Element können zwischen dem Detektor und der Lichtquelle angeordnet sein. Durch eine Lichtquelle kann das Mijkrospektrometer unabhängig von Fremdlicht sein.

Ferner wird ein Verfahren zum Herstellen eines Bauelements vorgestellt, wobei das Verfahren die folgenden Schritte aufweist:
Strukturieren eines Musters von Gräben in ein transparentes Substrat des Bauelements; und
Ausbilden von Trennwänden in den Gräben, wobei die Trennwände aus einem lichtabsorbierenden Material ausgebildet werden, um zwischen den Trennwänden lichtdurchlässige Lichtleiter auszubilden.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 eine Schnittdarstellung eines Bauelements gemäß einem Ausführungsbeispiel;
Fig. 2 eine Darstellung einer wabenförmigen Matrix gemäß einem Ausführungsbeispiel;
Fig. 3 eine Schnittdarstellung eines mehrschichtigen Bauelements gemäß einem Ausführungsbeispiel;
Fig. 4 eine Schnittdarstellung eines Mikrospektrometers gemäß einem Ausführungsbeispiel;
Fig. 5 eine Darstellung eines mehrschichtigen Bauelements gemäß einem Ausführungsbeispiel;
Fig. 6 eine Darstellung einer Filterfunktion eines Bauelements gemäß einem Ausführungsbeispiel;
die Figuren 7 bis 19 Schnittdarstellungen von verschiedenen Ausführungsbeispielen von Mikrospektrometern gemäß dem hier vorgestellten Ansatz; und

Fig. 20 ein Ablaufdiagramm eines Verfahrens zum Herstellen eines Bauelements gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

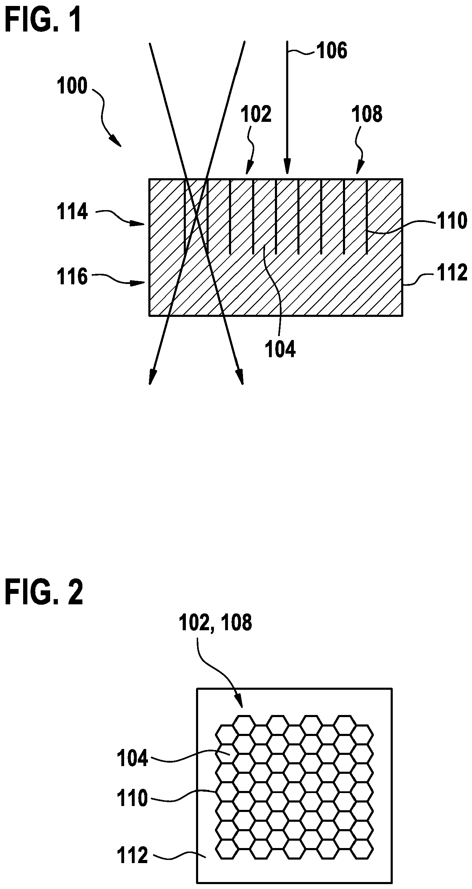

Fig. 1 zeigt eine Schnittdarstellung eines Bauelements 100 gemäß einem Ausführungsbeispiel. Das Bauelement 100 ist ein Einfallswinkelbegrenzer 100 für ein Mikrospektrometer. Das Bauelement 100 weist eine Matrix 102 aus Lichtleitern 104 auf, die in einer konstruktiven Einfallsrichtung 106 des Lichts ausgerichtet sind. Die Lichtleiter 104 sind untereinander durch ein Muster 108 aus in der Einfallsrichtung 106 ausgerichteten Trennwänden 110 getrennt. Die Trennwände 110 sind aus einem lichtabsorbierenden Material.

Das Grundprinzip des Tube Array Winkelfilters 100 beruht auf optisch transparenten Bereichen 104 beispielsweise in Luft, Glas oder über 1100 nm Wellenlänge Si und Bereichen 110, bei denen das Licht absorbiert wird. Je nach Design der lichtabsorbierenden Flächen 110 kann der Strahlengang und damit die Strahlwinkelverteilung beeinflusst werden.

Unterschiedliche Ausführungsformen des Tube Arrays 100 sind darstellbar.

In dem hier dargestellten Ausführungsbeispiel weist das Bauelement 100 ein transparentes Substrat 112 auf. Die Trennwände 110 sind in das Substrat 112 eingebracht. Das Substrat 112 bildet die Lichtleiter 104 aus. Für die Trennwände 110 sind Gräben in das Substrat strukturiert, beispielsweise getrencht worden, in denen anschließend das lichtabsorbierende Material abgeschieden worden ist. Denkbar ist jedoch auch, dass die Gräben auf eine andere Art des Strukturierens als des Trenchens in das Substrat eingebracht werden, beispielsweise durch einfaches reaktives Ionenätzen (RIE), Laserstrukturierung oder andere verbreitete isotrope und anisotrope physikalische oder chemische Strukturierungsverfahren.

Die Gräben wurden bei der Herstellung des Bauelements 100 nur bis zu einer gewünschten Trennwandtiefe in das Substrat 112 gestrukturiert. Damit weist das Substrat 112 eine erste Schicht 114 und eine zweite Schicht 116 auf. In der ersten Schicht 114 ist das Muster 108 der Trennwände 110 angeordnet. Die zweite Schicht 116 weist hier keine Strukturen auf.

Fig. 2 zeigt eine Darstellung einer wabenförmigen Matrix 102 gemäß einem Ausführungsbeispiel. Die Matrix 102 entspricht im Wesentlichen der Matrix in Fig. 1. Die Matrix 102 ist aus wabenförmig angeordneten Lichtleitern 104 aufgebaut. Die dazwischenliegenden Trennwände 110 sind verzweigt. Die Lichtleiter 104 sind hexagonal und gleich groß. Das Muster 108 der Trennwände 110 ist damit ebenfalls wabenförmig. Die Matrix 102 ist in einem Teilbereich des Substrats 112 angeordnet. Rund um die Matrix 102 erstreckt sich ein Randbereich des Substrats 112, in dem keine Strukturen angeordnet sind.

Ein sehr hoher Tube Array Strukturen Füllgrad und damit eine hohe Lichtintensität werden bei der Verwendung von Strukturen erreicht, bei denen die optische Tube Array Lichtführung nicht in Luft/Vakuum, sondern in einem festen Dielektrikum realisiert ist. Gleichzeitig wird die mechanische Robustheit erhöht.

In den Figuren 1 und 2 wird ein Design aufgeführt, welches durch Strukturieren und anschließendes Auffüllen der Gräben oder, hier nicht abgebildet, anschließende Beschichtung der Gräbenwände mit einem lichtabsorbierenden Material, beispielsweise Nanowires wie CNT oder durch Erzeugung poröser Strukturen entsteht. An den horizontalen Oberflächen der Lichtleiter 104 wird die absorbierende Schicht wieder entfernt. Dieses Design hat sehr große Vorteile, da der optische Wirkungsgrad der lichtdurchlässigen Flächen 104 sehr hoch ist. Die Trenchtiefe kann durch die Schichtdicke mit Ätzstop oder durch eine zeitlich begrenzte Ätzung variiert werden. Eine sechseckige Ausführung der einzelnen Tubes 104 ist vorteilhaft, weil Füllgrad und Winkelfilter Performance in einem guten Verhältnis stehen. Eine zusätzliche Antireflexionsbeschichtung der beiden Oberflächen erhöht die Lichtausbeute weiter.

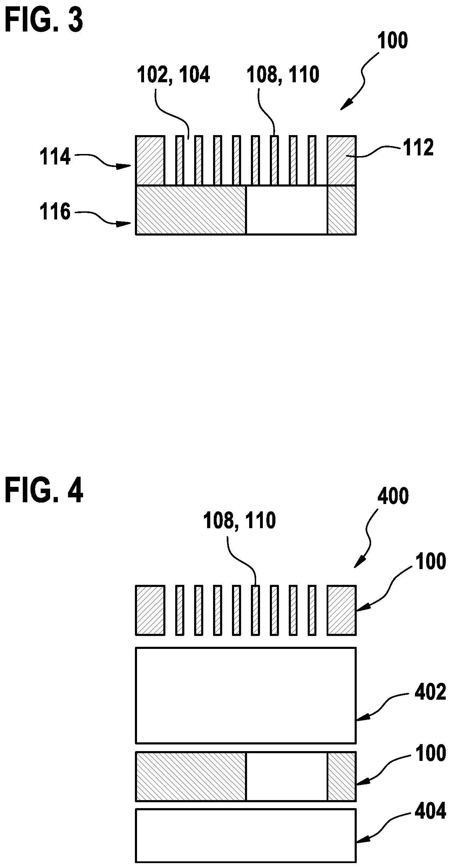

Fig. 3 zeigt eine Schnittdarstellung eines mehrschichtigen Bauelements 100 gemäß einem Ausführungsbeispiel. Das Bauelement entspricht im Wesentlichen dem Bauelement in Fig. 1. Im Gegensatz dazu sind die Lichtleiter 104 hier als Aussparungen aus dem Substrat 112 ausgeführt. Das Material des Substrats ist hier lichtabsorbierend. Das Substrat 112 bildet die Trennwände 110 zwischen den Lichtleitern 104.

Die Trennwände 110 des hier abgebildeten Musters 108 sind geradlinig und parallel zueinander ausgerichtet. Die Lichtleiter 104 sind also Schlitze, die den Einfallswinkel nur in einer Achse begrenzen. Um die Begrenzung des Einfallswinkels in zwei Achsen zu erreichen, weist das hier dargestellte Bauelement 100 zwei Schichten 114, 116 auf. In der ersten Schicht ist das erste Muster 108 in einer ersten Ausrichtung angeordnet. In der zweiten Schicht 116 ist ein zweites Muster 108 in einer zweiten Ausrichtung angeordnet. Die Muster 108 sind dabei gleich, aber orthogonal zueinander ausgerichtet.

In einem alternativen Ausführungsbeispiel weist das Bauelement 100 wie in den Figuren 1 und 2 ein transparentes Substrat 112 auf. Die Muster 108 der Trennwände 110 sind von gegenüberliegenden Seiten des Substrats 112 in das Substrat getrencht. Dabei ist die Trennwandtiefe der Trennwände, halb so groß, wie die Dicke des Substrats.

In Fig. 3 ist eine Ausführung beschrieben, die aus mindestens zwei Layer 114, 116 besteht. Jedes Layer 114, 116 limitiert die Winkelverteilung nur in eine Richtung. Die Oberflächen dieses Designs sind ebenfalls mit optisch absorbierenden Schichten beschichtet oder bestehen aus optisch absorbierenden Material. Dieses Design hat den Vorteil, dass die jeweilige Winkelfilterung in zwei Subsysteme 114, 116 aufgeteilt und wie in Fig. 4 auf unterschiedliche Bauteile 100 verteilt werden kann.

Fig. 4 zeigt eine Schnittdarstellung eines Mikrospektrometers 400 gemäß einem Ausführungsbeispiel. Das Mikrospektrometer 400 weist zwei Bauelemente 100 gemäß dem hier vorgestellten Ansatz, ein spektrales Element 402 und einen Detektor 404 auf. Das spektrale Element 402 ist beispielsweise ein Fabry-Perot Interferometer. Der Detektor 404 ist beispielsweise ein fotoelektrisches Bauteil. Das spektrale Element 402 ist hier zwischen den Bauelementen 100 angeordnet. Das erste Bauelement 100 begrenzt den Einfallswinkel auf das spektrale Element 402 in einer ersten Achse. Das zweite Bauelement 100 ist zwischen dem spektralen Element 402 und dem Detektor 404 angeordnet. Das zweite Bauelement 100 begrenzt den Einfallswinkel auf den Detektor 404 in einer senkrecht auf die erste Achse stehenden zweiten Achse. Dazu sind die Muster 108 der Trennwände 110 um 90° verdreht zueinander angeordnet.

In einem Ausführungsbeispiel weist das Mikrospektrometer 400 ferner eine Lichtquelle auf. Die Bauelemente 100 und das spektrale Element 402 sind zwischen der Lichtquelle und dem Detektor 404 angeordnet.

Mit anderen Worten wird ein Miniaturspektrometer 400 mit einer Eingangswinkelbegrenzung durch ein Tube Array 100 vorgestellt.

Das mikromechanische Fabry-Pérot-Interferometer (FPI) 402 besteht aus zwei Spiegelelementen, die auf einem Substrat gegebenenfalls über einem Durchgangsloch, angeordnet sind. Das Interferometer 402 kann auch aus zwei Substraten mit Durchgangslöchern konstruiert sein. Der Lichtstrahl wird vertikal durch die Sandwichbauform mit zwei hochreflektierenden Spiegeln geleitet, wobei jeweils schmalbandige Bereiche um die Resonanzwellenlänge und deren Obertöne in Abhängigkeit vom Abstand der beiden Spiegel transmittiert werden. Durch Variation des Abstandes kann die gewünschte Resonanzwellenlänge eingestellt werden. Mit dem nachfolgenden Detektor 404 kann die Lichtleistung gemessen werden und so seriell ein Spektrum aufgenommen werden. Ein zusätzlicher Vorbandpassfilter kann die gewünschte Ordnung der Wellenlänge herausfiltern, so dass Fehler durch Cavity-Moden anderer Ordnung minimiert werden.

Bei beispielsweise Fabry-Perot Interferometern (FPI) 402 als linear variable Filter oder mechanisch tunebare FP1s 402 bewirkt eine Variation des Einfallswinkels des Lichtstrahles eine Verschiebung der zu messenden Wellenlänge. Kommen gleichzeitig Lichtstrahlen mit unterschiedlichen Einfallswinkeln auf den FPI Filter 402, wird die mögliche Wellenlängenauflösung verringert, Spektren mit starken Transmissionsvariationen beziehungsweise Absorptionsvariationen in einem kleinen Wellenlängenbereich sind dadurch nicht mehr gut auflösbar. Ist diese Verteilung der Einfallswinkel zudem um einen bestimmten Winkel abseits der Normalen zentriert, führt dies zu einer Verschiebung des kompletten Spektrums, also einem Wellenlängen-Offsetfehler.

Hier wird der Einfallswinkel über ein zusätzliches "Tube Array" Filter 100 verringert.

Dazu wird eine geometrische Kontur in einem Substrat erzeugt, mit der die Varianz der Einfallswinkel zur optischen Achse beziehungsweise der Flächennormalen der Resonatorspiegel eines optischen Systems minimiert werden kann.

Das hier vorgestellte Bauelement 100 weist eine Lichtleitermatrix auf, die als Tube Array bezeichnet werden kann. Dadurch ist das Bauelement 100 dazu ausgebildet, eine Einfallswinkelvarianz in optische Systeme zubegrenzen. Das Bauelement 100 ist dadurch gekennzeichnet, dass in ein Substrat in einer Matrixanordnung Lichtleiterelemente parallel zueinander angeordnet sind, die durch breitbandig lichtabsorbierende Wände voneinander abgegrenzt sind.

In einer Ausführungsvariante sind die Lichtleiterelemente in Luft, Gas oder Vakuum realisiert, während die Wände und eine gegebenenfalls vorhandene Beschichtung dieser mechanisch die Struktur tragen.

In einer alternativen Ausführungsvariante sind die Lichtleiterelemente in einem festen Dielektrikum realisiert, wie beispielsweise Glas oder für Wellenlängen über 1100 nm Silizium. Das Dielektrikum ist dabei idealerweise das Substratmaterial. Absorbierende Wände sind in dieses eingelassen beziehungsweise eingetrieben.

Die beiden horizontalen Oberflächen des Bauelements beziehungsweise die Enden der Lichtleiter sind vorzugsweise mit einer Antireflexionsbeschichtung versehen.

Das hier dargestellte Miniaturspektrometersystem 400 weist zumindest ein spektrales Element 402 und einen Fotodetektor 404 auf.

Alternativ weist ein Monochromatorsystem, eine breitbandige Lichtquelle, eine Lichtführung 100 mit Begrenzung der Einfalls-/Ausfallswinkelvarianzen auf das spektrale Element 402 sowie das spektrales Element 402 auf.

Bei dem Miniaturspektrometersystem 400 beziehungsweise dem Monochromatorsystem kann die Lichtführung 100 aus mehreren unterschiedlichen Segmenten bestehen, um die Intensität auf dem Detektor 404 zu maximieren oder um hohe Aspektverhältnisse und damit schmale Akzeptanzwinkelbereiche zu realisieren.

Bei dem Miniaturspektrometersystem 400 beziehungsweise dem Monochromatorsystem kann die Lichtführung 100 auch aus Reflektoren oder Linsengeometrien, also kontinuierlichen Flächen oder Fresnel bestehen.

Das spektrale Element 402 kann ein mikromechanisches Fabry-Perot Interferometer-Bauelement sein. Das Spektrale Element 402 kann mindestens ein Substrat und mindestens zwei durch einen Spalt voneinander beabstandete, übereinander angeordnete Spiegelelemente aufweisen.

Die "Tube Array" Strukturen 100 können an unterschiedlichen Positionen des Lichtpfades angeordnet sein, sodass ein einfacherer Gesamtfertigungsprozess möglich ist.

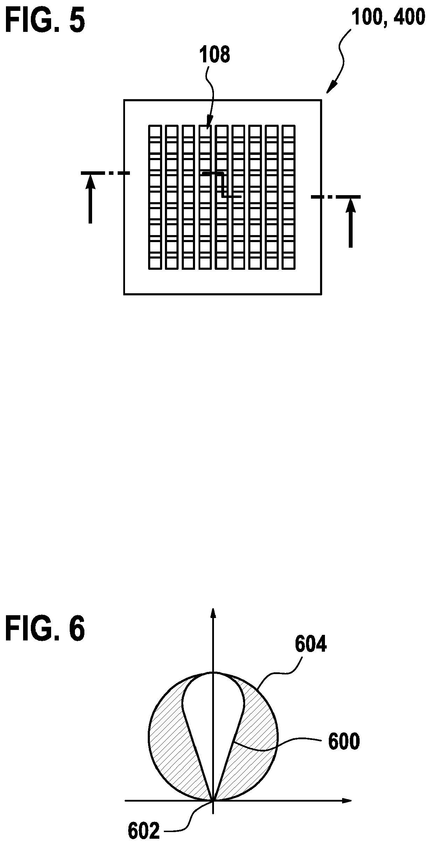

Fig. 5 zeigt eine Darstellung eines mehrschichtigen Bauelements 100 gemäß einem Ausführungsbeispiel. Das Bauelement 100 entspricht im Wesentlichen dem Bauelement in Fig. 3. Die hier dargestellte Draufsicht entspricht aber auch einer Draufsicht des in Fig. 4 dargestellten Mikrospektrometers 400. Dabei ist erkennbar, wie die zwei winkelversetzt zueinander, übereinander gestapelten Muster 108 den Einfallswinkel in zwei Achsen wirksam begrenzen. Die beiden Muster 108 resultieren in viereckigen Lichtleitern.

Fig. 6 zeigt eine Darstellung einer Filterfunktion 600 eines Bauelements gemäß einem Ausführungsbeispiel. Die Filterfunktion 600 ist in einem Diagramm aufgetragen, das ausgehend von einem Ursprung 602 eine Lichtintensität in Polarkoordinaten darstellt. Dabei ist der Filterfunktion 600 eine natürliche Transmission 604 unterlagert. Die natürliche Transmission 604 weist ihre maximale Lichtintensität bei einem Einfallswinkel von 90° zu der Oberfläche des transmittierenden Bauteils auf. Mit dem flacher werdenden Einfallswinkel wird die Lichtintensität geringer, bis sie parallel zu dem transmittierenden Bauteil null wird. Die Filterfunktion 600 weist ebenfalls ihre maximale Lichtintensität bei einem Einfallswinkel von 90° zu der Oberfläche des Bauelements auf. Bis zu einem Winkel von etwa 5° entspricht die Filterfunktion 600 der natürlichen Transmission 604. Ab 5° nimmt die Durchlässigkeit der Filterfunktion 600 rapide ab, um bereits bei etwa 10° null zu erreichen.

Mit anderen Worten ist in Fig. 6 das Ziel einer möglichen Filterauslegung eines Tube Arrays gezeigt. Von einem bestimmten Strahler beziehungsweise dem Target werden nur bestimmte Strahlrichtungen 600 von dem "Tube Array" durch gelassen. Je nach Design des Tube Arrays können unterschiedliche Winkelverteilungen herausgefiltert werden.

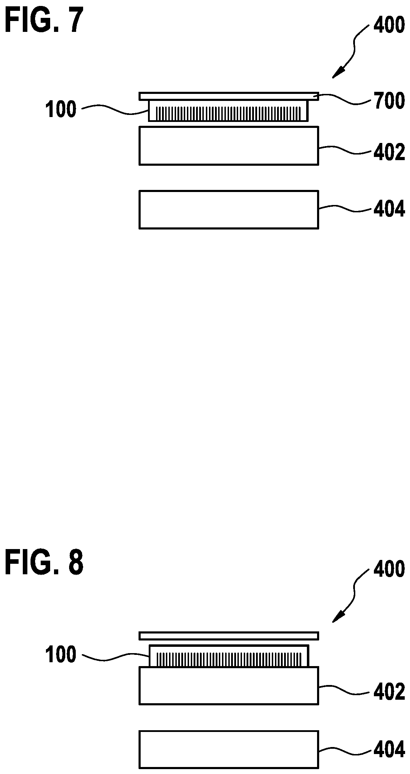

Die Figuren 7 bis 19 zeigen Schnittdarstellungen von verschiedenen Ausführungsbeispielen von Mikrospektrometern 400 gemäß dem hier vorgestellten Ansatz. Die Mikrospektrometer entsprechen im Wesentlichen dem Mikrospektrometer in Fig. 4. Im Gegensatz dazu weisen alle dargestellten Mikrospektrometer 400 lediglich ein in zwei Achsen begrenzendes Bauelement 100 zur Begrenzung des Einfallswinkels auf.

In Fig. 7 ist das spektrale Element 402 zwischen dem Bauelement 100 und dem Detektor 404 angeordnet. Das Bauelement 100 ist mit einer Schutzscheibe 700 des Mikrospektrometers 400 verbunden.

In Fig. 8 ist das spektrale Element 402 zwischen dem Bauelement 100 und dem Detektor 404 angeordnet. Das Bauelement 100 ist mit dem spektralen Element 402 verbunden.

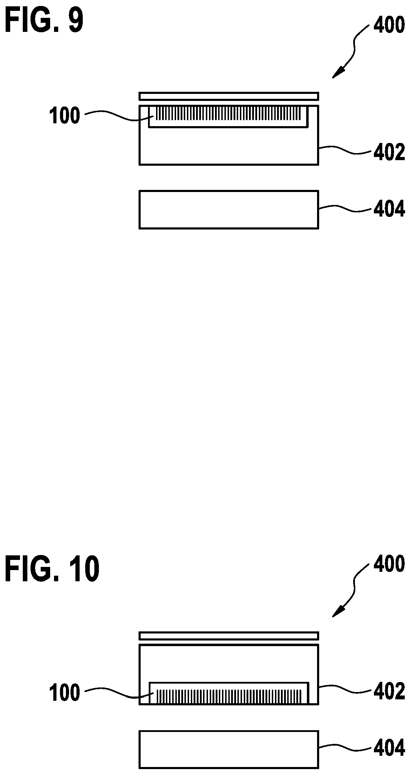

In Fig. 9 ist das spektrale Element 402 zwischen dem Bauelement 100 und dem Detektor 404 angeordnet. Das Bauelement 100 ist in das spektrale Element 402 eingelassen.

In Fig. 10 ist das Bauelement 100 zwischen dem spektralen Element 402 und dem Detektor 404 angeordnet. Das Bauelement 100 ist in das spektrale Element 402 eingelassen.

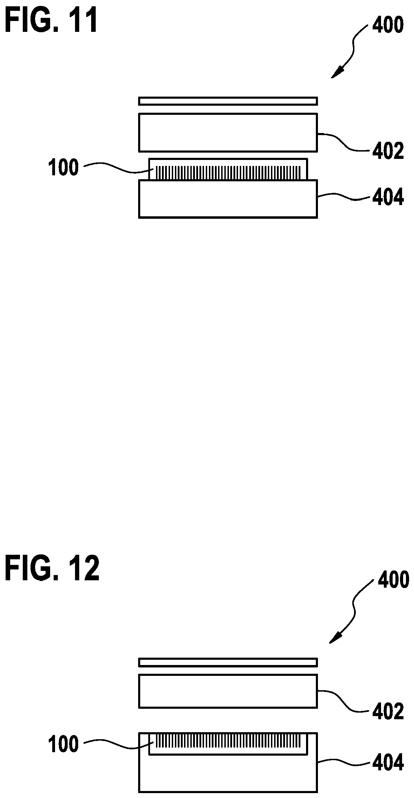

In Fig. 11 ist das Bauelement 100 zwischen dem spektralen Element 402 und dem Detektor 404 angeordnet. Das Bauelement 100 ist auf dem Detektor 404 angeordnet.

In Fig. 12 ist das Bauelement 100 zwischen dem spektralen Element 402 und dem Detektor 404 angeordnet. Das Bauelement 100 ist in den Detektor 404 eingelassen.

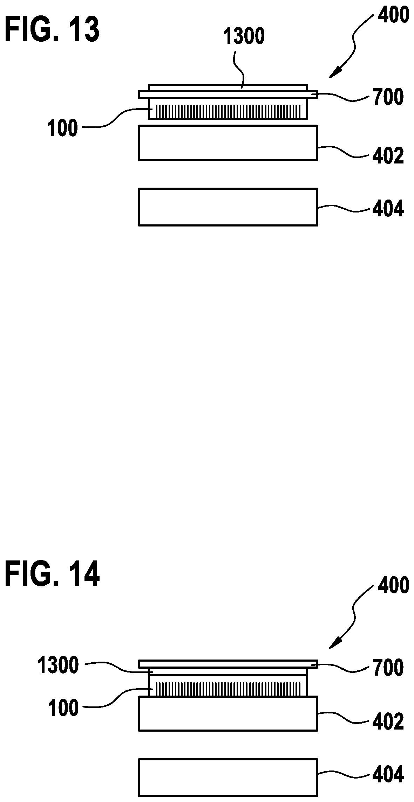

In Fig. 13 ist das spektrale Element 402 zwischen dem Bauelement 100 und dem Detektor 404 angeordnet. Das Bauelement 100 ist mit der Schutzscheibe 700 des Mikrospektrometers 400 verbunden. Zusätzlich ist die Schutzscheibe 700 mit einer Antireflexionsschicht 1300 versehen.

In Fig. 14 ist das spektrale Element 402 zwischen dem Bauelement 100 und dem Detektor 404 angeordnet. Das Bauelement 100 ist mit dem spektralen Element 402 verbunden. Zwischen dem Bauelement 100 und der Schutzscheibe 700 ist die Antireflexionsschicht 1300 angeordnet.

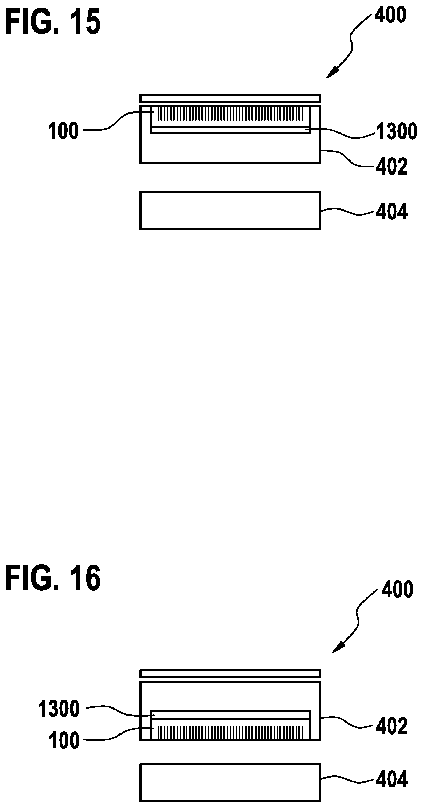

In Fig. 15 ist das Bauelement 100 zwischen dem spektralen Element 402 und dem Detektor 404 angeordnet. Die Antireflexionsschicht 1300 ist zwischen dem Bauelement 100 und dem spektralen Element 402 angeordnet. Das Bauelement 100 und die Antireflexionsschicht 1300 sind in das spektrale Element 402 eingelassen.

In Fig. 16 ist das Bauelement 100 zwischen dem spektralen Element 402 und dem Detektor 404 angeordnet. Die Antireflexionsschicht 1300 ist zwischen dem Bauelement 100 und dem spektralen Element 402 angeordnet. Das Bauelement 100 und die Antireflexionsschicht 1300 sind in das spektrale Element 402 eingelassen.

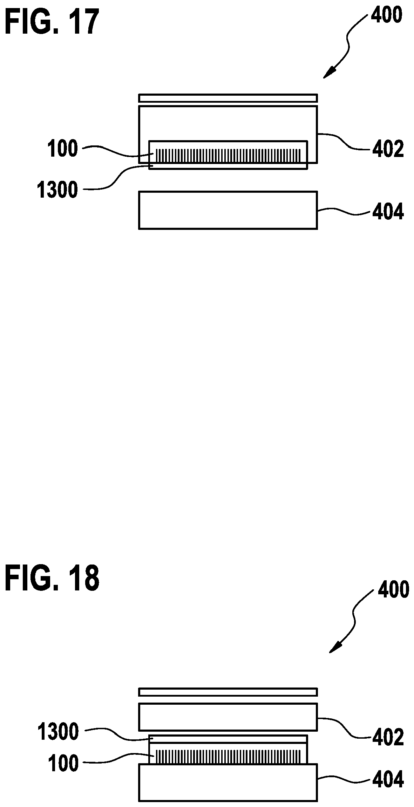

In Fig. 17 ist das Bauelement 100 zwischen dem spektralen Element 402 und dem Detektor 404 angeordnet. Das Bauelement 100 ist in das spektrale Element 402 eingelassen. Die Antireflexionsschicht 1300 ist zwischen dem Bauelement 100 und dem Detektor 404 angeordnet.

In Fig. 18 ist das Bauelement 100 zwischen dem spektralen Element 402 und dem Detektor 404 angeordnet. Das Bauelement 100 ist auf dem Detektor 404 angeordnet. Die Antireflexionsschicht 1300 ist zwischen dem Bauelement 100 und dem spektralen Element 402 angeordnet.

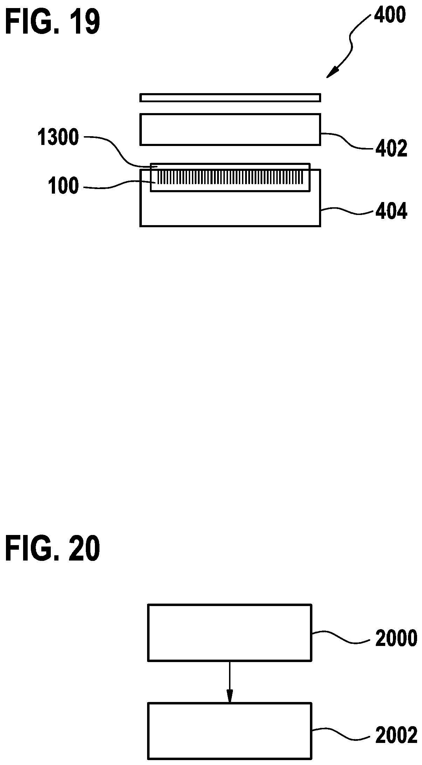

In Fig. 19 ist das Bauelement 100 zwischen dem spektralen Element 402 und dem Detektor 404 angeordnet. Das Bauelement 100 ist in den Detektor 404 eingelassen. Die Antireflexionsschicht 1300 ist zwischen dem Bauelement 100 und dem spektralen Element 402 angeordnet.

Diverse Einbauorte in einem Spektrometersystem 400 sind möglich. Diverse Einbauorte in einem Monochromatorsystem möglich. Die hier vorgestellten Spektrometer 400 können eine exzentrische oder konzentrische Beleuchtungsanordnung aufweisen. Die Einfallswinkel oder Ausfallswinkel der am Ort des Targets reflektierten Lichtstrahlen werden dabei über die Tube Array Kontur 100 innerhalb des Lichtpfads begrenzt.

Eine kompakte Bauform ist durch Integration der "Tube Array" Geometrien 100 mithilfe von MEMS Prozessen möglich. Dabei ergibt sich ein dünner Aufbau mit einem kleinen Winkelbereich, was gleichbedeutend mit einem hohen Aspektverhältnis ist. Das hohe Aspektverhältnis in dem dünnen Element kann durch kleine Tube-Querschnitte erreicht werden. Das Bauelement 100 kann direkt in die Kappe 700, den Detektor 404 oder die MEMS Substrate 402 integriert sein.

Durch eine sequenzielle Anordnung von einem Tube Array 100, einem FPI Filter 402 und einem breitbandigen Detektor 404 können Spektrometer 400 mit guter Messperformance bei einer geringen Bandbreite der gemessenen Wellenlänge und einer guten Auflösung aufgebaut werden. In den unterschiedlichen Spektrometer Bauteilen kann dieses Tube Array 100 wie in den Figuren 7 bis 19 positioniert werden, also jeweils auf, unter oder monolithisch innerhalb dieser Bauteile.

Zusätzlich zu den Tube Array 100 kann ein Anti Reflexionsfilter 1300 als ARC, Edge oder Bandpass Filter integriert werden, um den Messbereich des Spektrometers 400 eindeutig zu gestalten beziehungsweise zu optimieren. Ein solcher Filter 1300 kann jeweils auf, unter oder monolithisch innerhalb dieser Bauteile angeordnet sein.

Durch eine sequentielle Anordnung von einem Tube Array 100, einem FPI Filter 402 und einer breitbandigen Lichtquelle kann ein schmalbandiger Monochromator mit geringer Bandbreite der gemessenen Wellenlänge aufgebaut werden. In den unterschiedlichen Bauteilen kann dieses Tube Array 100 jeweils auf, unter oder monolithisch innerhalb dieser Bauteile positioniert werden.

Fig. 20 zeigt ein Ablaufdiagramm eines Verfahrens zum Herstellen eines Bauelements gemäß einem Ausführungsbeispiel. Das Verfahren weist einen Schritt 2000 des Strukturierens und einen Schritt 2002 des Ausbildens auf. Im Schritt 2000 des Strukturierens wird ein Muster von Gräben in ein transparentes Substrat bis zu einer gewünschten Trennwandtiefe getrencht. Im Schritt 2002 des Ausbildens werden Trennwände in den Gräben ausgebildet. Dazu wird lichtabsorbierendes Material in den Gräben abgelagert. Das transparente Substrat zwischen den Trennwänden bildet Lichtleiter aus.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Bauelement (100) zum Begrenzen eines Einfallswinkels von Licht, wobei das Bauelement (100) eine Matrix (102) aus in einer Einfallsrichtung (106) des Lichts ausgerichteten Lichtleitern (104) aufweist, die durch ein in der Einfallsrichtung (106) ausgerichtetes Muster (108) von Trennwänden (110) aus einem lichtabsorbierenden Material voneinander getrennt sind.

2. Bauelement (100) gemäß Anspruch 1, bei dem die Lichtleiter (104) als Aussparungen aus einem lichtabsorbierenden Substrat (112) des Bauelements (100) strukturiert, insbesondere getrencht sind, wobei das Substrat (112) zwischen den Lichtleitern (104) die Trennwände (110) ausbildet.

3. Bauelement (100) gemäß Anspruch 1, bei der die Lichtleiter (104) durch ein transparentes Substrat (112) des Bauelements (100) ausgebildet sind, wobei für die Trennwände (110) Gräben in das Substrat (112) strukturiert, insbesondere getrencht, sind und mit dem lichtabsorbierenden Material aufgefüllt sind, um die Trennwände (110) auszubilden.

4. Bauelement (100) gemäß Anspruch 3, bei dem die Gräben von einer Seite des Substrats (112) bis zu einer Trennwandtiefe strukturiert, insbesondere getrencht, sind, wobei die Trennwandtiefe geringer als eine Materialstärke des Substrats (112) ist.

5. Bauelement (100) gemäß einem der vorangegangenen Ansprüche, bei dem das Muster (108) in einer ersten Schicht (114) des Substrats (112) angeordnet ist und zumindest ein weiteres Muster (108) von Trennwänden (110) in zumindest einer weiteren Schicht (116) des Substrats (112) angeordnet ist, wobei das Muster (108) und das weitere Muster (108) unterschiedlich ausgerichtet sind.

6. Bauelement (100) gemäß einem der vorangegangenen Ansprüche, bei dem das Muster (108) parallele geradlinige Trennwände (110) aufweist.

7. Bauelement (100) gemäß einem der Ansprüche 1 bis 5, bei dem das Muster (108) eine Wabenstruktur ausbildet.

8. Bauelement (100) gemäß einem der vorangegangenen Ansprüche, mit zumindest einer auf einer Oberfläche des Bauelements (100) angeordneten Blendenstruktur, wobei die Blendenstruktur ein der Matrix entsprechendes Muster aus Blendenöffnungen aufweist.

9. Mikrospektrometer (400) mit folgenden Merkmalen:
einem Bauelement (100) gemäß einem der vorangegangenen Ansprüche;
einem spektralen Element (402); und
einem Detektor (404), wobei das Bauelement (100) und das spektrale Element (402) in einem optischen Pfad des Mikrospektrometers (400) vor dem Detektor (404) angeordnet sind.

10. Mikrospektrometer (400) gemäß Anspruch 8, mit einer Lichtquelle, wobei das Bauelement (100) und das spektrale Element (402) zwischen dem Detektor (404) und der Lichtquelle angeordnet sind.

11. Verfahren zum Herstellen eines Bauelements (100), wobei das Verfahren die folgenden Schritte aufweist:
Strukturieren (2000) eines Musters (108) von Gräben in ein transparentes Substrat (112) des Bauelements (100); und
Ausbilden (2002) von Trennwänden (110) in den Gräben, wobei die Trennwände (110) aus einem lichtabsorbierenden Material ausgebildet werden, um zwischen den Trennwänden (110) lichtdurchlässige Lichtleiter (104) auszubilden.
